(19) Europäisches Patentamt
European Patent Office
Office européen des brevets

(11) EP 4 674 785 A1

(12) EUROPEAN PATENT APPLICATION
published in accordance with Art. 153(4) EPC

(43) Date of publication:
07.01.2026 Bulletin 2026/02

(21) Application number: 23935786.6

(22) Date of filing: 30.11.2023

(51) International Patent Classification (IPC):
B65D 65/40 (2006.01)   B32B 27/32 (2006.01)

(52) Cooperative Patent Classification (CPC):
Y02W 30/80

(86) International application number:
PCT/JP2023/042986

(87) International publication number:
WO 2024/228275 (07.11.2024 Gazette 2024/45)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 01.05.2023 JP 2023075730

(71) Applicant: Toppan Holdings Inc.
Tokyo 110-0016 (JP)

(72) Inventors:
• SUZUTA, Masayoshi
Tokyo 110-0016 (JP)
• NAKAMURA, Ryuichi
Tokyo 110-0016 (JP)
• KATO, Chiaki
Tokyo 110-0016 (JP)
• HATA, Soichi
Tokyo 110-0016 (JP)
• SUZUKI, Katsuhiro
Tokyo 110-0016 (JP)

(74) Representative: Hasegawa, Kan
Patentanwaltskanzlei Hasegawa
Untere Hauptstraße 56
85354 Freising (DE)

(54) LAMINATE FOR PACKAGING MATERIAL, PACKAGING CONTAINER, AND PACKAGING ARTICLE

(57) A laminate for packaging material comprises an outer layer substrate and a sealant layer. The sealant layer is a polyolefin resin film comprising a recycled resin, a content of the recycled resin in the laminate for packaging material is 10% by volume or more or 10% by mass or more, and the recycled resin is a chemically recycled resin.

Fig.1

## Description

### Technical Field

The present disclosure relates to a laminate for packaging material, a packaging container, and a packaging article.

### Background Art

Packaging materials used for packaging bags and the like are required to have various properties depending on the application. Therefore, to satisfy such various performances simultaneously, a packaging material is generally configured with a laminate including an outer layer substrate and a sealant layer.

As such a laminate for packaging material, a laminate is conventionally known which includes a first layer including an inner liner and a second layer including an outer sheath, wherein the outer sheath is composed of a post-consumer resin (hereinafter, also referred to as "PCR") that may contain contaminants such as paper, ink, and food residues (see, for example, Patent Literature 1 below).

### Citation List

### Patent Literature

Patent Literature 1: JP 2022-552096A

### Summary of Invention

### Technical Problem

However, the laminate described in Patent Literature 1 above has the following problems when the content of PCR is increased, where the PCR is a recycled resin containing contaminants, a so-called materially recycled resin.

That is, in the laminate described in Patent Literature 1, foreign matter such as impurities, gels, and aggregates may appear on the surface, and there was room for improvement in terms of hygienic property.

Furthermore, in the laminate described in Patent Literature 1, odor components generated due to thermal degradation of the polyolefin resin were detected, and there was also room for improvement in terms of quality.

An object of the present disclosure is to provide a laminate for packaging material, a packaging container, and a packaging article that can improve hygienic property and quality even when the content of recycled resin is sufficiently high.

### Solution to Problem

One aspect of the present disclosure provides a laminate for packaging material, comprising an outer layer substrate and a sealant layer, wherein the sealant layer is a polyolefin resin film comprising a recycled resin, a content of the recycled resin in the laminate for packaging material is 10% by volume or more or 10% by mass or more, and the recycled resin is a chemically recycled resin.

According to the above laminate for packaging material, the sealant layer is required to have particularly high hygienic property and quality because it comes into contact with the contents accommodated in a packaging container obtained using the laminate for packaging material. In contrast, in the laminate for packaging material of the present disclosure, the recycled resin of the polyolefin resin film used as the sealant layer is a chemically recycled resin. The chemically recycled resin is a recycled resin produced by being polymerized after being once reduced to a low molecular weight through a process performed according to material properties, such as a process of monomerization via naphtha obtained by gasification, oil conversion, and purification of discarded resin, or a process of monomerization by depolymerization. For this reason, the chemically recycled resin is less likely to contain foreign matter such as impurities, gels, and aggregates, compared to a materially recycled resin, which is a resin re-raw-materialized by washing and crushing resin products such as collected used packaging materials, and then heating and melting them. Furthermore, unlike the materially recycled resin, the chemically recycled resin is not affected by heat treatment such as heating and melting after the recycling process, and thus thermal degradation is less likely to occur. Therefore, it is possible to achieve both a content of the recycled resin in the laminate for packaging material of 10% by volume or more or 10% by mass or more, and an improvement in hygienic property and quality. That is, the laminate for packaging material of the present disclosure can improve hygienic property and quality even when the content of the recycled resin is sufficiently high.

The higher the content (usage ratio) of the recycled resin in the laminate for packaging material, the more the environmental load can be reduced. The content of the recycled resin is preferably 20% by mass or more, more preferably 25% by mass or more, still more preferably 30% by mass or more, and particularly preferably 40% by mass or more. Here, if it is not easy to calculate the mass ratio (% by mass) after the laminate for packaging material is made into a packaging material, the unit of the content of the recycled resin may be "% by volume" so that it can be calculated by a film thickness ratio. That is, the ratio of the film thickness of the layer using the recycled resin to the total film thickness of the laminate can be used as the content of the recycled resin (% by volume). Note that the density of polyethylene and polypropylene, which constitute the majority of the packaging material, is about 0.86 to 0.97 g/cm$^3$, and the numerical range of the content of the recycled resin defined in % by volume will generally also satisfy the value defined in % by mass. That is, the content of the recycled resin in the laminate for packaging material is preferably 20% by volume or more, more preferably 25% by volume or more, still more preferably 30% by volume or more, and particularly preferably 40% by volume or more.

In the above laminate for packaging material, a thickness of the sealant layer may be greater than a thickness of the outer layer substrate, and a content of the recycled resin included in the sealant layer may be 20% by volume or more or 20% by mass or more.

In the above laminate for packaging material, the sealant layer occupies a large proportion in the laminate for packaging material, and by using a polyolefin resin film containing a recycled resin as the sealant layer, the content of the recycled resin can be easily increased.

The above laminate for packaging material may further comprise an intermediate substrate between the outer layer substrate and the sealant layer.

In this case, since the outer layer substrate is reinforced by the intermediate substrate, the strength of the laminate can be further improved.

In the above laminate for packaging material, the recycled resin may be a post-consumer recycled resin (PCR).

Since a large quantity of PCR can be secured in the market, the cost of the laminate can be reduced.

Note that the recycled resin may be a combination of PCR and post-industrial recycled resin (PIR).

The above laminate for packaging material may further comprise a gas barrier layer between the outer layer substrate and the sealant layer.

In this case, the gas barrier property of the laminate is further improved. Therefore, when a packaging container is produced using the laminate and contents are accommodated in the packaging container, deterioration of the contents due to gases such as oxygen can be effectively suppressed.

The above laminate for packaging material may further comprise a second sealant layer on a surface of the outer layer substrate opposite to the sealant layer.

This laminate for packaging material is suitable as a packaging material for manufacturing a tube container.

Another aspect of the present disclosure provides a packaging container obtained using the above laminate for packaging material.

According to the above packaging container, as described above, in the laminate for packaging material, a polyolefin resin film comprising a recycled resin is used as the sealant layer, the recycled resin is a chemically recycled resin, and the chemically recycled resin is less likely to contain foreign matter such as impurities, gels, and aggregates compared to a materially recycled resin. Furthermore, unlike the materially recycled resin, the chemically recycled resin is not affected by heat treatment such as heating and melting after the recycling process, and thus thermal degradation is less likely to occur. Therefore, the packaging container obtained using the above laminate for packaging material can safely accommodate contents such as food products even when the content of the recycled resin in the laminate for packaging material is sufficiently increased to 10% by volume or more or 10% by mass or more. In addition, since the laminate for packaging material can improve quality, the packaging container obtained using the laminate for packaging material can have improved properties such as strength.

Still another aspect of the present disclosure provides a packaging article, comprising: the above packaging container; and contents accommodated in the packaging container.

According to the above packaging article, as described above, the chemically recycled resin as the recycled resin included in the sealant layer of the laminate is less likely to contain foreign matter such as impurities, gels, and aggregates compared to a materially recycled resin. Furthermore, unlike the materially recycled resin, the chemically recycled resin is not affected by heat treatment such as heating and melting after the recycling process, and thus thermal degradation is less likely to occur. Therefore, the above packaging article can be safely stored with contents such as food products accommodated therein, even when the content of the recycled resin in the laminate for packaging material is sufficiently increased to 10% by volume or more or 10% by mass or more. In addition, since the laminate for packaging material can improve quality, the packaging article comprising the packaging container obtained using the laminate for packaging material can have improved properties such as strength.

**Advantageous Effects of Invention**

According to the present disclosure, a laminate for packaging material, a packaging container, and a packaging article are provided that can improve hygienic property and quality even when the content of recycled resin is sufficiently high.

**Brief Description of Drawings**

[Fig.1] Fig. 1 is a cross-sectional view showing an embodiment of a laminate for packaging material according to the present disclosure.
[Fig.2] Fig. 2 is a cross-sectional view showing another embodiment of the laminate for packaging material according to the present disclosure.
[Fig.3] Fig. 3 is a cross-sectional view showing another embodiment of the laminate for packaging material according to the present disclosure.
[Fig.4] Fig. 4 is a cross-sectional view showing an embodiment of a packaging article according to the present disclosure.

**Description of Embodiments**

Hereinafter, preferred embodiments of the present disclosure will be described in detail. In the drawings, the same or corresponding parts are denoted by the same reference numerals, and redundant descriptions are omitted.

[Laminate for Packaging Material]

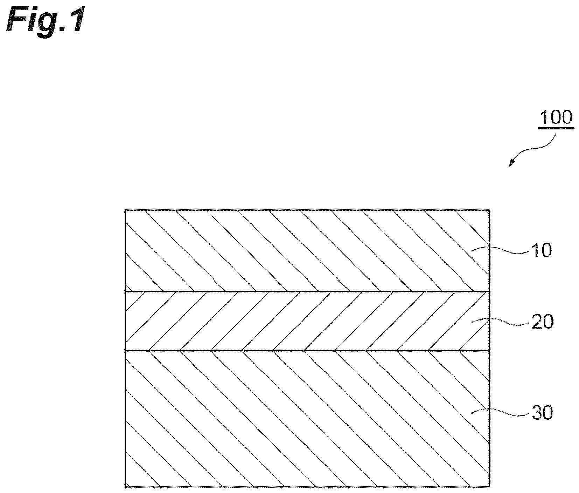

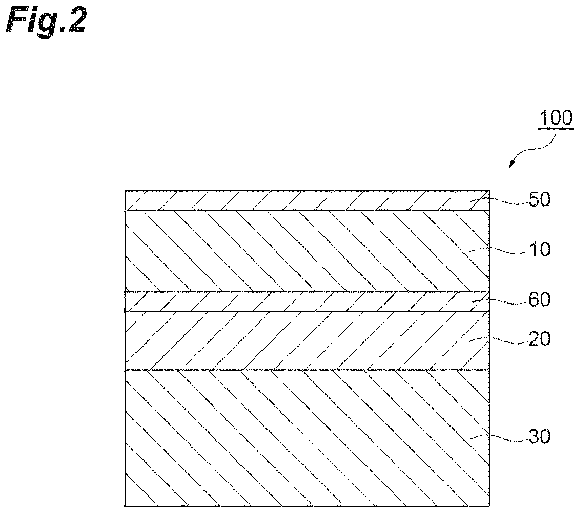

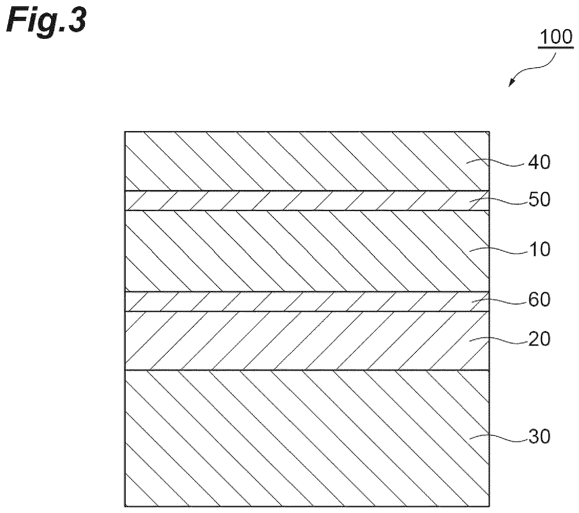

First, an embodiment of a laminate for packaging material according to the present disclosure will be described with reference to Figs. 1 to 3. Figs. 1 to 3 are cross-sectional views showing various embodiments of the laminate for packaging material according to the present disclosure.
As shown in Fig. 1, a laminate for packaging material (hereinafter, also referred to as "laminate") 100 comprises an outer layer substrate 10 and a sealant layer 30.
The laminate 100 may further comprise an intermediate substrate 20 between the outer layer substrate 10 and the sealant layer 30.
A content of the recycled resin in the laminate for packaging material 100 is 10% by volume or more or 10% by mass or more. Here, the sealant layer 30 is made of a polyolefin resin film comprising a recycled resin, and the recycled resin is a chemically recycled resin.
The laminate 100 may further comprise a printed layer 50, as shown in Fig. 2.
The laminate 100 may further comprise a gas barrier layer 60 together with the printed layer 50, as shown in Fig. 2, but may further comprise the gas barrier layer 60 in place of the printed layer 50.
When the laminate 100 is used for a tube container, as shown in Fig. 3, the laminate 100 may further comprise a second sealant layer 40 on a side of the outer layer substrate 10 opposite to the sealant layer 30.
According to the laminate 100, hygienic property and quality can be improved even when the content of recycled resin is sufficiently high.

(Outer layer substrate)

For the outer layer substrate 10, a film substrate made of a resin material can be used. Examples of such a resin material include polyester films such as polyethylene terephthalate (PET) and polyethylene naphthalate (PEN), polyolefin resins such as polyethylene and polypropylene, polystyrene, and engineering plastics such as polyamide like 66-nylon, polycarbonate, polyacrylonitrile, and polyimide. As the resin material, a resin material having mechanical strength and dimensional stability is preferable. The resin material is processed into a film shape and used as a film substrate.
The resin material may be a non-recycled resin, a recycled resin, or a mixture thereof.
Since the outer layer substrate 10 does not come into contact with the contents, when a recycled resin is used, a materially recycled resin may be used, but it is preferable to use a chemically recycled resin from the viewpoints of hygienic property and quality.
The non-recycled resin may be a petroleum-derived resin obtained using petroleum-derived raw material monomers, a biomass-derived resin obtained using biomass-derived raw material monomers, or a mixture thereof, but from the viewpoint of reducing environmental load, it is preferably a biomass-derived resin.

The chemically recycled resin may be composed of a single chemically recycled resin, but may be composed of a mixture of a plurality of types of chemically recycled resins.

The outer layer substrate 10 may have a single-layer or a multilayer structure. In the case of a multilayer structure, the outer layer substrate 10 is formed from a layer configuration of two or more layers, and at least one of the layers comprises a chemically recycled resin.

Further, the outer layer substrate 10 may be a layer formed by coextruding a multilayer film, if necessary, in a form using an adhesive resin or the like for a layer made of an ethylene-vinyl alcohol copolymer or a layer made of a polyamide, and stretching the resulting film. For example, a three-type five-layer substrate made of chemically recycled resin/adhesive resin/ethylene-vinyl alcohol copolymer/adhesive resin/chemically recycled resin, a three-type three-layer substrate made of chemically recycled resin/adhesive resin/ethylene-vinyl alcohol copolymer, or a multilayer substrate made of petroleum-derived (natural) resin/chemically recycled resin/petroleum-derived (natural) resin or petroleum-derived (natural) resin/other polyolefin/chemically recycled resin/other resin/petroleum-derived (natural) resin, and the like can be cited. In the multilayer substrate 10, materials of the same type may have different densities depending on their function.

The outer layer substrate 10 may further contain additives such as a filler, an antistatic agent, a plasticizer, a lubricant, a light-shielding pigment, and an antioxidant, as necessary.

When the outer layer substrate 10 contains a light-shielding pigment, the outer layer substrate 10 can function as a light-shielding layer.

The outer layer substrate 10 may be a non-oriented film or an oriented film. The oriented film may be a uniaxially oriented film or a biaxially oriented film. The outer layer substrate 10 may be composed of either an oriented film or a non-oriented film. When the outer layer substrate 10 is uniaxially oriented, it is possible to improve the tearability and heat resistance of the laminate 100. When the outer layer substrate 10 is a biaxially oriented film, the mechanical strength and dimensional stability of the laminate 100 can be improved.

When an adhesive layer is provided on the surface of the outer layer substrate 10, various pretreatments such as corona treatment, plasma treatment, ozone treatment, or flame treatment may be applied to the surface on the adhesive layer side, or a coat layer such as an easy-adhesion layer may be provided, in order to enhance adhesion with the adhesive layer.

The thickness of the outer layer substrate 10 is not particularly limited, and is, for example, 10 $\mu$m or more and 100 $\mu$m or less. From the viewpoints of material reduction for reducing environmental load, and obtaining excellent heat resistance, impact resistance, and gas barrier properties, the thickness of the outer layer substrate 10 may be 15 $\mu$m or more, 20 $\mu$m or more, 25 $\mu$m or more, 30 $\mu$m or more, or 40 $\mu$m or more. The thickness of the outer layer substrate 10 may also be 60 $\mu$m or less, or 50 $\mu$m or less.

(Sealant layer)

The sealant layer 30 is made of a polyolefin resin film comprising a polyolefin resin such as polyethylene and polypropylene, and the polyolefin resin comprises a chemically recycled resin.

Polyethylene is a resin containing ethylene as a structural unit. Examples of polyethylene include a homopolymer of ethylene and a copolymer of ethylene and another monomer. The proportion of ethylene in the polyethylene is, for example, 80 mol% or more.

Examples of the other monomer include, for example, an $\alpha$-olefin, vinyl acetate, and an acrylic acid ester.

The $\alpha$-olefin may be an olefin having a carbon number in the range of 3 to 20. Examples of the $\alpha$-olefin include propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, or 6-methyl-1-heptene.

Examples of polyethylene include high-density polyethylene (HDPE), medium-density polyethylene (MDPE), low-density polyethylene (LDPE), linear low-density polyethylene (LLDPE), very-low-density polyethylene (VLDPE), ethylene-vinyl acetate copolymer, ionomer resin, ethylene-acrylic acid copolymer, ethylene-methyl acrylate copolymer, ethylene-methacrylic acid copolymer, and ethylene-propylene copolymer. These may be used alone or in combination of two kinds or more.

Polypropylene is a resin containing propylene as a structural unit, and may not contain ethylene as a structural unit, or may be a copolymer with ethylene or various $\alpha$-olefins as well as propylene alone. Examples of polypropylene include homopolypropylene, block polypropylene, and random polypropylene.

The sealant layer 30 preferably has a melting point lower than the melting point of the outer layer substrate 10. In this case, it becomes possible to heat-fuse the sealant layer 30 while suppressing the melting of the outer layer substrate 10 during heat sealing of the laminate 100. Furthermore, by heating the laminate 100, the outer layer substrate 10 and the sealant layer 30 can be easily separated, and material recycling can be easily performed for each of the outer layer substrate 10 and the sealant layer 30.

The sealant layer 30 may further contain additives such as a flame retardant, a slip agent, an antiblocking agent, an antioxidant, a light stabilizer, a tackifier, an antistatic agent, and a light-shielding pigment, as necessary.

When the sealant layer 30 contains a light-shielding pigment, the sealant layer 30 can function as a light-shielding layer.

The sealant layer 30 may be composed of a single layer or a plurality of layers.

When the sealant layer 30 is composed of a single layer, a polyolefin resin film comprising a chemically recycled resin (chemically recycled polyolefin resin) as the recycled resin is used for the sealant layer 30. In this case, it may also contain a petroleum-derived polyolefin resin or a biomass-derived polyolefin resin.

When contents are accommodated in a packaging container obtained using the laminate 100, the sealant layer 30 becomes a layer that comes into contact with the contents. When the sealant layer 30 is a polyolefin resin film comprising a chemically recycled polyolefin resin, since there are few foreign matters such as impurities, gels, and aggregates, the possibility that foreign matters such as impurities, gels, and aggregates migrate to the contents with heating during retort treatment or boil treatment of the packaging container can be further reduced. For this reason, the laminate 100 can be used with confidence for packaging contents such as food products.

When the sealant layer 30 is composed of a plurality of layers, all layers may be a polyolefin resin film comprising a chemically recycled polyolefin resin, or it may have a multilayer structure of a non-recycled polyolefin resin film and a polyolefin resin film comprising a chemically recycled polyolefin resin.

When the plurality of layers is three layers, the plurality of layers may be composed of a first outer layer, an intermediate layer, and a second outer layer.

For example, the first outer layer and the second outer layer may be made of a non-recycled polyolefin resin film, and the intermediate layer may be made of a recycled polyolefin resin film.

Furthermore, the sealant layer 30 may be colored white or the like. For example, a white sealant containing a titanium oxide-based white pigment can be used. Note that the sealant layer 30 is not limited to a white sealant, and may be composed of a sealant of another color by containing a pigment other than a white pigment.

The thickness of the sealant layer 30 is not particularly limited, and is appropriately adjusted according to the application of the laminate 100 and the like. The thickness of the sealant layer 30 may be, for example, 10 $\mu$m or more, 25 $\mu$m or more, 30 $\mu$m or more, 40 $\mu$m or more, or 50 $\mu$m or more. The thickness of the sealant layer 30 may also be 100 $\mu$m or less, 80 $\mu$m or less, 60 $\mu$m or less, or 50 $\mu$m or less.

(Second sealant layer)

As the second sealant layer 40, the same one as the above-described sealant layer 30 can be used.

The thickness of the second sealant layer 40 may be the same as or different from the thickness of the sealant layer 30. The material constituting the second sealant layer 40 may also be the same as or different from the material constituting the sealant layer 30.

(Intermediate substrate)

The intermediate substrate 20 is a substrate that reinforces the outer layer substrate 10, and can further improve the strength of the laminate 100.

For the intermediate substrate 20, a film substrate made of a resin material similar to the resin material used for the outer layer substrate 10 can be used. That is, examples of the resin material include polyester films such as polyethylene terephthalate (PET) and polyethylene naphthalate (PEN), polyolefin resins such as polyethylene and polypropylene, polystyrene, and engineering plastics such as polyamide like 66-nylon, polycarbonate, polyacrylonitrile, and polyimide. As the resin material, a resin material having mechanical strength and dimensional stability is preferable. The resin material is processed into a film shape and used as a film substrate. The film substrate may be a non-oriented film or an oriented film.

The intermediate substrate 20 may be a single layer or a laminate of a plurality of layers.

When the intermediate substrate 20 is composed of a single layer, the intermediate substrate 20 may be a recycled polyolefin resin film or a non-recycled polyolefin resin film.

When the intermediate substrate 20 is composed of a plurality of layers, all layers may be a recycled polyolefin resin film, all layers may be a non-recycled polyolefin resin film, or some layers may be a non-recycled polyolefin resin film and the remainder may be a recycled polyolefin resin film.

Note that as long as the content of the recycled resin in the laminate 100 is 10% by volume or more or 10% by mass or more, a material other than the above can be used as the material constituting the intermediate substrate 20. For example, as the material constituting the intermediate substrate 20, a polyethylene terephthalate resin can be used, although the ratio of polyolefin resin in the packaging material decreases. Furthermore, if a polyethylene terephthalate resin produced by chemical recycling is used as the material constituting the intermediate substrate 20, it becomes possible to improve the content of the recycled resin. As the intermediate substrate 20, a nylon resin film or the like can also be used. Furthermore, as the nylon resin film, a nylon resin film produced by chemical recycling may be used.

When the plurality of layers is three layers, the plurality of layers may be composed of a first outer layer, an intermediate layer, and a second outer layer.

Here, the first outer layer and the second outer layer may be made of a non-recycled polyolefin resin film, and the intermediate layer may be made of a recycled polyolefin resin film. In this case, during retort treatment or boil treatment of the packaging container, the possibility that foreign matter such as impurities, gels, and aggregates migrates from the intermediate substrate 20 through the sealant layer 30 to the contents with heating can be further reduced. For this reason, the laminate 100 can be used with confidence for packaging contents such as food products.

The thickness of the intermediate substrate 20 is not particularly limited, and is appropriately adjusted according to the application of the laminate 100 and the like. The thickness of the intermediate substrate 20 may be, for example, 10 μm or more, 25 μm or more, 30 μm or more, 40 μm or more, or 50 μm or more. The thickness of the intermediate substrate 20 may also be 100 μm or less, 80 μm or less, 60 μm or less, or 50 μm or less.

(Adhesive layer)

Examples of the adhesive layer include an adhesive layer formed using an adhesive, and an adhesive layer comprising an adhesive resin (hereinafter, also referred to as an "adhesive resin layer").

Examples of the adhesive include known adhesives such as urethane-based adhesives, polyester-based adhesives, polyamide-based adhesives, epoxy-based adhesives, and isocyanate-based adhesives.

The adhesive may or may not contain biomass-derived components, but from the viewpoint of reducing environmental load, it preferably contains biomass-derived components. Specific examples of the biomass-derived components include "DICDRY BM series" manufactured by DIC Corporation, and "ECOAD series" manufactured by Toyo Ink Co., Ltd.

The adhesive may be an adhesive containing an organic solvent or an adhesive not containing an organic solvent, but from the viewpoint of reducing environmental load, it is preferably an adhesive not containing an organic solvent (solvent-free adhesive).

The adhesive resin layer may be an extruded resin layer or a non-extruded resin layer.

The adhesive resin is a heat-fusible adhesive thermoplastic resin, and may be any resin that can be melted by heat and fused to each other. For example, resins such as low-density polyethylene, medium-density polyethylene, high-density polyethylene, linear low-density polyethylene, polypropylene, ethylene-propylene copolymer, methylpentene polymer, or an acid-modified polyolefin-based resin obtained by modifying a polyolefin-based resin such as polyethylene or polypropylene with an unsaturated carboxylic acid such as acrylic acid, methacrylic acid, maleic acid, maleic anhydride, fumaric acid, or itaconic acid, can be used.

The thickness of the adhesive layer is not particularly limited, and may be, for example, 1 μm or more. By setting the thickness of the adhesive layer to 1 μm or more, sufficient adhesive strength can be obtained. The thickness of the adhesive layer may be 2 μm or more.

The thickness of the adhesive layer may be 50 μm or less, may be 5 μm or less, and may be 3 μm or less.

(Printed layer)

As shown in Fig. 2 or Fig. 3, the printed layer 50 may be provided between layers or on the outside in the laminate 100. When the printed layer 50 is provided between layers, the printed layer 50 is provided, for example, on a surface opposite to the sealant layer 30 side (outer surface) as shown in Fig. 2 or Fig. 3. The printed layer 50 may be provided on a surface of the outer layer substrate 10 on the sealant layer 30 side (inner surface). When the printed layer 50 is provided on the inner surface of the outer layer substrate 10, the printed layer 50 is protected by the outer layer substrate 10, so that deterioration of the printed layer 50 can be prevented. When the printed layer 50 is provided on the outer surface of the outer layer substrate 10 and the printed layer 50 is the outermost layer in the laminate 100, it becomes possible to easily remove the printed layer 50 when performing recycling after disposal of a packaging body including the laminate 100. When the laminate 100 comprises the intermediate substrate 20 as shown in Fig. 2 or Fig. 3, the printed layer 50 may be provided on the intermediate substrate 20. Here, the printed layer 50 may be provided between the outer layer substrate 10 and the intermediate substrate 20 as shown in Fig. 2 or Fig. 3, or may be provided between the intermediate substrate 20 and the sealant layer 30.

Furthermore, when the laminate 100 comprises the second sealant layer 40, the printed layer 50 may be provided on the second sealant layer 40. When the printed layer 50 is provided on the second sealant layer 40, by providing the printed layer 50 on a surface of the second sealant layer 40 opposite to the outer layer substrate 10 (outer surface), it becomes possible to easily remove the printed layer 50 when performing recycling after disposal of a packaging body including the laminate 100.

The printed layer 50 is a layer for displaying characters, patterns, and the like, and can be formed using an ink.

As the ink, for example, an ink prepared by adding various pigments, a plasticizer, a drying agent, a stabilizer, and the like to a binder resin such as a urethane-based, acrylic-based, nitrocellulose-based, or rubber-based resin can be used.

The ink may be an aqueous ink or an oil-based ink, but is preferably an aqueous ink. Since an aqueous ink uses water or alcohol as a solvent, the environmental load can be further reduced. In particular, when the adhesive is a solvent-free adhesive, using an aqueous ink as the ink can significantly reduce the environmental load. The ink may or may not be a biomass ink, but from the viewpoint of reducing environmental load, it is preferably a biomass ink. Here, the biomass ink refers to an ink containing components obtained from biological resources (biomass) such as cotton, pulp, rice bran, vegetable oil, and seeds of angiosperms. The ink may be a recycled ink obtained by collecting and regenerating used ink, or a non-recycled ink, but from the viewpoint of environmental load, it is preferably a recycled ink.

Furthermore, an easy-to-recycle ink can also be used as the ink. By using an easy-to-recycle ink, it becomes possible to easily perform recycling after disposal of the packaging body. Specific examples of the easy-to-recycle ink include "SunSpectro Solvawash" manufactured by DIC Corporation.

(Gas barrier layer)

As shown in Fig. 2 or Fig. 3, the laminate 100 may comprise a gas barrier layer 60 together with the printed layer 50, but may comprise the gas barrier layer 60 in place of the printed layer 50. The gas barrier layer 60 may be provided on at least one surface of the outer layer substrate 10. When the laminate 100 comprises the intermediate substrate 20, as shown in Fig. 2 or Fig. 3, the gas barrier layer 60 may be provided on at least one surface of the intermediate substrate 20.

The gas barrier layer 60 is a layer that improves the gas barrier property of the laminate 100.

The gas barrier layer 60 has a barrier property against gases such as water vapor or oxygen, for example.

As the gas barrier layer 60, for example, a vapor-deposited layer such as a vapor-deposited layer of a metal or a vapor-deposited layer of an inorganic compound can be used.

Examples of the metal include aluminum and silicon.

Examples of the inorganic oxide include aluminum oxide and silicon oxide (silica).

When the gas barrier layer 60 is a vapor-deposited layer of a metal such as aluminum, the gas barrier layer 60 can function as a light-shielding layer.

The gas barrier layer 60 may further comprise an overcoat layer on the vapor-deposited layer. As the overcoat layer, a coat layer obtained using a composition containing a water-soluble polymer and a silicon alkoxide, or a coat layer made of a resin such as urethane can be used.

(Other layers)

The laminate 100 may further comprise a layer containing a resin other than a polyolefin resin (non-polyolefin resin), as long as the content of the recycled resin is 10% by volume or more or 10% by mass or more. Examples of the non-polyolefin resin include polyamide resins such as nylon, and polyester resins such as polyethylene terephthalate (PET).

(Laminate)

(A) Content of Recycled Resin

In the laminate 100, the content of the recycled resin in the laminate 100 is 10% by volume or more or 10% by mass or more.

Note that when the content of the recycled resin in the polyolefin resin film comprising the recycled resin is 100% by volume (100% by mass), the content of the recycled resin in the laminate 100 can be determined as the ratio of the total thickness of the film to the total thickness of the laminate 100. However, when the content of the recycled resin in the polyolefin resin film comprising the recycled resin is X% by mass (less than 100% by mass) and the thickness of the film is Y1 ($\mu$m), the content of the recycled resin is calculated, wherein the thickness Y2 ($\mu$m) of the film is taken as X/100 $\times$ Y1 ($\mu$m).

The content of the recycled resin in the laminate 100 is preferably 20% by volume or more or 20% by mass or more, more preferably 25% by volume or more or 25% by mass or more, still more preferably 30% by volume or more or 30% by mass or more, and particularly preferably 40% by volume or more or 40% by mass or more.

In the present disclosure, the recycled resin is a chemically recycled resin and does not include a materially recycled resin.

The chemically recycled resin may be a post-consumer recycled resin (PCR), a post-industrial recycled resin (PIR), or a mixture thereof, but is preferably PCR. Since a large quantity of PCR can be secured in the market, if the chemically recycled resin is PCR, the cost of the laminate 100 can be reduced.

(B) Odor Component

For the laminate 100, in a total ion chromatogram obtained by performing mass spectrometry using a purge and trap gas chromatography-mass spectrometry method, when a ratio of a peak area of nonanal as an indicator of an odor component to a sum of peak area values of a total aliphatic hydrocarbon component is R1 (%), and a ratio of a peak area of decanal to the sum of the peak area values of the total aliphatic hydrocarbon component is R2 (%), R1 is preferably less than 1.5%, more preferably 1.0% or less, and particularly preferably 0.5% or less.

Furthermore, R2 is preferably less than 3.5%, more preferably 2.5% or less, and particularly preferably 1.5% or less.

It is preferable that R1 is less than 1.5% and R2 is less than 3.5%. In this case, thermal degradation is suppressed in the laminate 100 as a whole, and the quality of the laminate 100 can be further improved.

Specifically, the mass spectrometry is performed by cutting out a 1.0-gram sample from the laminate 100, placing this sample in a 20 mL vial with a trap for odor components, heating at 60°C for 1 hour to adsorb volatile components from the sample onto the trap, and analyzing the volatile components in the trap with a purge and trap gas chromatography-mass spectrometer.

(C) Fish Eye

A fish eye refers to foreign matter such as fish-eye-like spots (gelled materials) or carbonized materials seen in a film. The presence of a fish eye with a diameter of 1 mm or more is considered a defective product, and the number of fish eyes with a diameter of 0.5 mm or more and less than 1 mm is preferably 100/m$^2$ or less, more preferably 50/m$^2$ or less, and particularly preferably 10/m$^2$ or less.

(D) Variation of Dynamic Frictional Force

On the surface of the sealant layer 30 of the laminate 100, the variation (in-plane variation) $\sigma$ of the dynamic frictional force refers to the standard deviation of the dynamic frictional force.

$\sigma$ is preferably less than 0.45, more preferably less than 0.35, and particularly preferably less than 0.2. When $\sigma$ is less than 0.45, the transportability of the laminate 100 can be improved when it is conveyed with the layer having $\sigma$ less than 0.45 facing the conveyance roller side. Furthermore, on the surface of the layer, regions where the dynamic frictional force received from the conveyance roller is large and regions where it is small appear, and the difference in stress between these regions becomes smaller. Therefore, residual strain within the layer is reduced, and a decrease in the strength of the laminate 100 due to the residual strain can also be suppressed.

From the viewpoint of the strength of the laminate, $\sigma$ is preferably 0.1 or more, more preferably 0.2 or more, and particularly preferably 0.3 or more.

The dynamic friction coefficient is measured for the laminate 100 using a multi-functional static and dynamic friction tester TL201Tt (manufactured by Trinity-Lab Inc.) and a tactile probe. The standard deviation $\sigma$ of the dynamic frictional force is a value obtained based on JIS K 7125-ISO 8295. Specifically, it is determined by placing the laminate 100 on a test table with the sealant layer 30 facing down, and moving the tactile probe at a sliding speed of 10 mm/sec while it is in contact with the laminate 100 with a load of 50 grams.

(E) Impurity

When the laminate 100 is analyzed using a Fourier Transform Infrared Spectrometer (FT-IR: Fourier Transform Infrared Spectroscopy) by an Attenuated Total Reflection (ATR) method to obtain an ATR spectrum, a ratio R3 of an absorption coefficient of C=O stretching around 1720 cm$^{-1}$ derived from polyester and polyurethane to an absorption coefficient of methylene group C-H antisymmetric stretching around 2915 cm$^{-1}$ derived from polyethylene in the ATR spectrum is, as an indicator that the amount of resin components other than polyolefin is small, preferably less than 0.1, more preferably less than 0.05, and particularly preferably 0.01 or less.

In the above analysis, a diamond prism is used as a prism to be brought into close contact with the laminate 100, and an angle of incidence with respect to the surface of the laminate 100 is 45°.

When the laminate 100 includes the outer layer substrate 10 and the sealant layer 30, both the outer layer substrate 10 and the sealant layer 30 may be a recycled polyolefin resin film.

[Packaging Article]

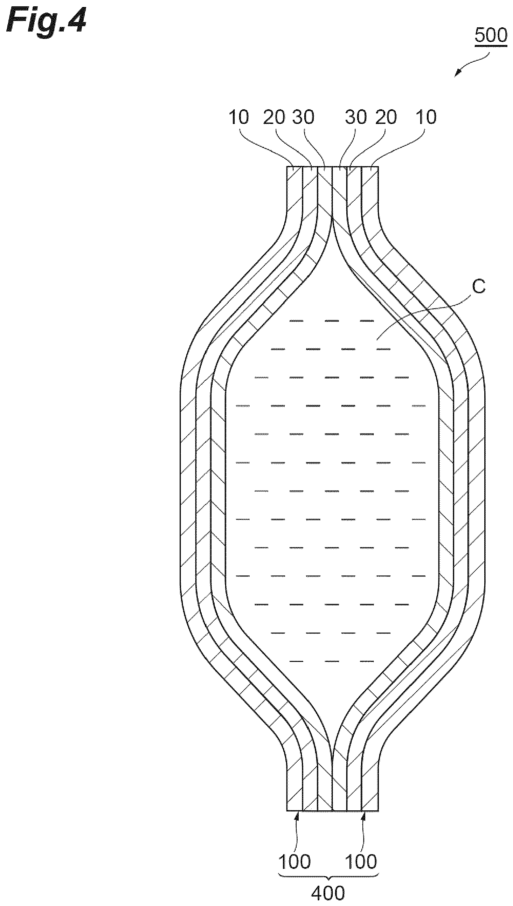

Next, an embodiment of a packaging article according to another aspect of the present disclosure will be described with reference to Fig. 4. Fig. 4 is a cross-sectional view showing an embodiment of a packaging article according to another aspect of the present disclosure.

As shown in Fig. 4, a packaging article 500 comprises a packaging bag 400 as a packaging container, and contents C accommodated in the packaging bag 400. The packaging bag 400 is obtained using a pair of laminates 100. The packaging bag 400 is obtained, for example, by facing the sealant layers 30 of a pair of laminates 100 toward each other and sealing the peripheral edges. The packaging bag 400 is configured with an accommodating part accommodating the contents C, and a sealed part provided around the accommodating part. The sealed part is a portion formed by sealing the sealant layers 30 of the opposing laminates 100 to each other, and the accommodating part is a portion where the sealant layers 30 of the opposing laminates 100 are not sealed to each other.

According to the packaging article 500, the chemically recycled resin as the recycled resin included in the laminate 100 is less likely to contain foreign matter such as impurities, gels, and aggregates, compared to a materially recycled resin, which is a resin re-raw-materialized by washing and crushing resin products such as collected used packaging materials, and then heating and melting them. Furthermore, unlike the materially recycled resin, the chemically recycled resin is not affected by heat treatment such as heating and melting after the recycling process, and thus thermal degradation is less likely to occur. Therefore, the packaging article 500 can safely accommodate contents C such as food products even when the content of the recycled resin in the laminate 100 is sufficiently increased to 10% by volume or more or 10% by mass or more. In addition, since the laminate 100 can improve quality, the packaging article 500 comprising the packaging bag 400 obtained using the laminate for packaging material 100 can have improved properties such as strength.

(Contents)

The contents C are not particularly limited and may be appropriately selected according to the application of the packaging bag 400. The contents C are not particularly limited, and examples of the contents C include food, shampoo, rinse, body soap, and detergent.

(Packaging Bag)

The pair of laminates 100 constituting the packaging bag 400 may have the same configuration as each other, or may have different configurations from each other.

The packaging bag 400 may comprise a half-cut line, and may further comprise an easy-opening processed part at both ends or one end of the half-cut line. Examples of the easy-opening processed part include a group of scores, and V-shaped, U-shaped, or I-shaped notches.

In the sealed part of the packaging bag 400, the sealant layers 30 of the pair of laminates 100 may be directly sealed to each other by heat sealing (see Fig. 4), or may be sealed to each other by an adhesive.

(Method of Manufacturing Packaging Article)

Next, an example of a method for manufacturing the packaging article 500 using the laminate 100 will be described.

First, a pair of laminates 100 is prepared. Then, the sealant layers 30 of the pair of laminates 100 are made to face each other, and the sealant layers 30 are sealed to each other. At this time, a part of the peripheral edge of the laminate is sealed so as to form a U-shape to form a sealed part, and an unsealed portion (non-sealed part) is formed. In this way, a packaging bag having an opening formed by the non-sealed part is obtained.

Next, the contents C are filled through the opening of the packaging bag. Thereafter, the sealant layers 30 of the laminate 100 are sealed to each other at the non-sealed part, so that the non-sealed part also becomes a sealed part. In this way, the packaging article 500 comprising the packaging bag 400 and the contents C accommodated therein can be manufactured.

Although the preferred embodiments of the present disclosure have been described above, the present disclosure is not limited to the above embodiments. For example, in the packaging article 500 shown in Fig. 4, the packaging bag 400 is formed using a pair of laminates 100, but a laminate 200 may be used in place of the laminate 100. The packaging bag may also be manufactured by folding a single laminate 100, 200 with the sealant layer 30 inside, and sealing the overlapping peripheral edges to each other.

In the packaging article 500 shown in Fig. 4, the packaging bag 400 may be a standing pouch-shaped packaging bag, a two-side-seal bag, a three-side-seal bag, a four-side-seal bag, a fin-seal bag, or a gusset bag. The packaging bag 400 may comprise a spout, or a synthetic resin fastener that can be repeatedly sealed by fitting a band-shaped projection part and a band-shaped groove part.

In the above embodiments, the packaging container is configured with a packaging bag, but the packaging container may be a tube container. When the packaging container is a tube container, the laminate 100 comprises the second sealant layer 40 bonded to the outer layer substrate 10.

Although the embodiments of the present disclosure have been described above, the summary of the present disclosure is as follows.

[1] A laminate for packaging material, comprising an outer layer substrate and a sealant layer, wherein the sealant layer is a polyolefin resin film comprising a recycled resin, a content of the recycled resin in the laminate for packaging material is 10% by volume or more or 10% by mass or more, and the recycled resin is a chemically recycled resin.

[2] The laminate for packaging material according to [1], wherein the content of the recycled resin in the laminate for packaging material is 20% by volume or more or 20% by mass or more.

[3] The laminate for packaging material according to [1] or [2], wherein a thickness of the sealant layer is greater than a thickness of the outer layer substrate, and a content of the recycled resin included in the sealant layer is 20% by volume or more or 20% by mass or more.

[4] The laminate for packaging material according to any one of [1] to [3], further comprising an intermediate substrate between the outer layer substrate and the sealant layer.

[5] The laminate for packaging material according to any one of [1] to [4], further comprising a gas barrier layer between the outer layer substrate and the sealant layer.

[6] The laminate for packaging material according to any one of [1] to [5], further comprising a second sealant layer on a surface of the outer layer substrate opposite to the sealant layer.

[7] A packaging container obtained using the laminate for packaging material according to any one of [1] to [6].

[8] A packaging article, comprising: the packaging container according to [7]; and contents accommodated in the packaging container.

**Examples**

The present disclosure will be described more specifically by the following Examples, but the present disclosure is not limited to these Examples.

(Example 1)

A petroleum-derived biaxially oriented PET film (thickness 35 $\mu$m) was prepared as an outer layer substrate, and a chemically recycled low-density polyethylene (PCR-Chemi R 100%-LDPE) film (thickness 50 $\mu$m) was prepared as a sealant layer. Note that "PCR-Chemi R 100%-LDPE" means that the content of post-consumer chemically recycled resin (PCR-Chemi R) in the sealant layer is 100% by volume (100% by mass).

Then, after forming a printed layer on one surface of the outer layer substrate with a water-based flexographic ink, an adhesive for dry lamination (urethane-based adhesive) was applied to the surface of the printed layer to form an adhesive layer with a thickness of 3 $\mu$m (dry film thickness), and the sealant layer was laminated onto the adhesive layer to produce a laminate for packaging material (outer layer substrate/printed layer/adhesive layer/sealant layer).

(Example 2)

A petroleum-derived biaxially oriented PET film (thickness 35 $\mu$m) was prepared as an outer layer substrate, a biaxially oriented PET film (thickness 35 $\mu$m) was prepared as an intermediate substrate, and a chemically recycled low-density polyethylene (PCR-Chemi R 100%-LDPE) film (thickness 50 $\mu$m) was prepared as a sealant layer. Note that "PCR-Chemi R 100%-LDPE" means that the content of post-consumer chemically recycled resin (PCR-Chemi R) in the sealant layer is 100% by volume (100% by mass).

Then, aluminum oxide with a thickness of 10 nm was vapor-deposited on one surface of the intermediate substrate, and an organic-inorganic hybrid layer with a thickness of 300 nm was provided as an overcoat layer on the obtained vapor-deposited layer. The organic-inorganic hybrid layer was formed using a composition containing a polyvinyl alcohol resin and tetraethoxysilane.

Next, after forming a printed layer on one surface of the outer layer substrate with a water-based flexographic ink, an adhesive for dry lamination (urethane-based adhesive) was applied to the surface of the printed layer to form a first adhesive layer with a thickness of 3 $\mu$m (dry film thickness), and the overcoat layer of the intermediate substrate was laminated onto the first adhesive layer. Subsequently, an adhesive for dry lamination (urethane-based adhesive) was applied to the surface of the intermediate substrate opposite to the overcoat layer to form a second adhesive layer with a thickness of 3 $\mu$m (dry film thickness), and the sealant layer was laminated onto the second adhesive layer to produce a laminate for packaging material (outer layer substrate/printed layer/first adhesive layer/overcoat layer/vapor-deposited layer/intermediate substrate/second adhesive layer/sealant layer).

(Example 3)

A laminate for packaging material (outer layer substrate/printed layer/adhesive layer/sealant layer) was produced in the same manner as in Example 1, except that the outer layer substrate was changed from a petroleum-derived biaxially oriented PET film (thickness 35 μm) to a biomass-derived biaxially oriented PET film (thickness 35 μm), the sealant layer was changed from a chemically recycled low-density polyethylene (PCR-Chemi R 100%-LDPE) film (thickness 50 μm) to a chemically recycled low-density polyethylene (PCR-Chemi R 40%-LDPE) film (thickness 50 μm), and the adhesive was changed from an adhesive for dry lamination (urethane-based adhesive) to a solvent-free adhesive (polyester-based) to form an adhesive layer with a thickness of 1.5 μm (after drying).

Note that "PCR-Chemi R 40%-LDPE" means that the content of post-consumer chemically recycled resin (PCR-Chemi R) in the sealant layer is 40% by mass.

(Example 4)

A laminate for packaging material (outer layer substrate/printed layer/first adhesive layer/overcoat layer/vapor-deposited layer/intermediate substrate/second adhesive layer/sealant layer) was produced in the same manner as in Example 2, except that the intermediate substrate was changed from a petroleum-derived biaxially oriented PET film (thickness 35 μm) to a petroleum-derived polyamide film (nylon 6: thickness 35 μm), and the sealant layer was changed from a chemically recycled low-density polyethylene (PCR-Chemi R 100%-LDPE) film (thickness 50 μm) to a three-layer co-extruded film of a petroleum-derived low-density polyethylene (LDPE) film (thickness 20 μm), a chemically recycled low-density polyethylene (PCR-Chemi R 100%-LDPE) film (thickness 20 μm), and a petroleum-derived low-density polyethylene (LDPE) film (thickness 20 μm).

(Example 5)

A laminate for packaging material (outer layer substrate/printed layer/first adhesive layer/overcoat layer/vapor-deposited layer/intermediate substrate/second adhesive layer/sealant layer) was produced in the same manner as in Example 2, except that the outer layer substrate was changed from a petroleum-derived biaxially oriented PET film (thickness 35 μm) to a petroleum-derived polyamide film (nylon 6: thickness 35 μm), and the sealant layer was changed from a chemically recycled low-density polyethylene (PCR-Chemi R 100%-LDPE) film (thickness 50 μm) to a three-layer co-extruded film of a petroleum-derived low-density polyethylene (LDPE) film (thickness 20 μm), a chemically recycled low-density polyethylene (PCR-Chemi R 100%-LDPE) film (thickness 20 μm), and a petroleum-derived low-density polyethylene (LDPE) film (thickness 20 μm).

(Example 6)

A laminate for packaging material (outer layer substrate/printed layer/first adhesive layer/overcoat layer/vapor-deposited layer/intermediate substrate/second adhesive layer/sealant layer) was produced in the same manner as in Example 2, except that the outer layer substrate was changed from a petroleum-derived biaxially oriented PET film (thickness 35 μm) to a petroleum-derived oriented polypropylene film (OPP: thickness 35 μm), the intermediate substrate was changed from a petroleum-derived biaxially oriented PET film (thickness 35 μm) to a petroleum-derived oriented polypropylene film (OPP: thickness 35 μm), and the sealant layer was changed from a chemically recycled low-density polyethylene (PCR-Chemi R 100%-LDPE) film (thickness 50 μm) to a non-oriented polypropylene (PCR-Chemi R 40%-CPP) film (thickness 50 μm) containing 40% by mass of chemically recycled polypropylene.

Note that the vapor-deposited layer on the OPP film of the intermediate substrate was formed by vapor-depositing silicon oxide to a thickness of 10 nm, and the overcoat layer was an organic-inorganic hybrid layer formed using a composition containing a polyvinyl alcohol resin, tetraethoxysilane, and a silane coupling agent.

(Example 7)

A laminate for packaging material (outer layer substrate/printed layer/first adhesive layer/overcoat/vapor-deposited layer/intermediate substrate/second adhesive layer/sealant layer) was produced in the same manner as in Example 2, except that the outer layer substrate was changed from a petroleum-derived biaxially oriented PET film (thickness 35 μm) to a petroleum-derived oriented polypropylene film (OPP: thickness 25 μm), and the intermediate substrate was changed from a petroleum-derived biaxially oriented PET film (thickness 35 μm) to a petroleum-derived oriented polypropylene film (OPP: thickness 25 μm).

Note that the vapor-deposited layer on the OPP film of the intermediate substrate was formed by vapor-depositing silicon oxide to a thickness of 10 nm, and the overcoat layer was an organic-inorganic hybrid layer formed using a composition containing a polyvinyl alcohol resin, tetraethoxysilane, and a silane coupling agent.

(Example 8)

A laminate for packaging material (outer layer substrate/printed layer/first adhesive layer/overcoat layer/vapor-deposited layer/intermediate substrate/second adhesive layer/sealant layer) was produced in the same manner as in Example 7, except that the outer layer substrate was changed from a petroleum-derived oriented polypropylene film (OPP: thickness 25 $\mu$m) to a biomass-derived oriented polypropylene film (OPP: thickness 25 $\mu$m), and the sealant layer was changed from a chemically recycled low-density polyethylene (PCR-Chemi R 100%-LDPE) film (thickness 50 $\mu$m) to a three-layer co-extruded film of a petroleum-derived low-density polyethylene (LDPE) film (thickness 20 $\mu$m), a chemically recycled low-density polyethylene (PCR-Chemi R 100%-LDPE) film (thickness 20 $\mu$m), and a petroleum-derived low-density polyethylene (LDPE) film (thickness 20 $\mu$m).

(Example 9)

A petroleum-derived biaxially oriented PET film (thickness 30 $\mu$m) was prepared as an outer layer substrate, a three-layer co-extruded film of a petroleum-derived low-density polyethylene (LDPE) film (thickness 20 $\mu$m), a chemically recycled low-density polyethylene (PCR-Chemi R 100%-LDPE) film (thickness 40 $\mu$m), and a petroleum-derived low-density polyethylene (LDPE) film (thickness 20 $\mu$m) was prepared as a sealant layer, and a petroleum-derived low-density polyethylene (LDPE) film (thickness 80 $\mu$m) was prepared as a second sealant layer (outer sealant layer). Note that "PCR-Chemi R 100%-LDPE" means that the content of post-consumer chemically recycled resin (PCR-Chemi R) in the PCR-Chemi R 100%-LDPE film of the sealant layer is 100% by volume (100% by mass).
Then, after forming a printed layer on one surface of the second sealant layer (outer sealant layer) with a water-based flexographic ink, an adhesive for dry lamination (urethane-based adhesive) was applied to one surface of the outer layer substrate to form a first adhesive layer with a thickness of 3 $\mu$m (dry film thickness), and the outer layer substrate and the surface of the second sealant layer (outer sealant layer) opposite to the printed layer were laminated together by the first adhesive layer. Subsequently, an adhesive for dry lamination (urethane-based adhesive) was applied to the other surface of the outer layer substrate to form a second adhesive layer with a thickness of 3 $\mu$m (dry film thickness), and the sealant layer was laminated onto the second adhesive layer to produce a laminate for packaging material (printed layer/second sealant layer (outer sealant layer)/first adhesive layer/outer layer substrate/second adhesive layer/sealant layer).

(Example 10)

A laminate for packaging material (printed layer/second sealant layer (outer sealant layer)/first adhesive layer/outer layer substrate/second adhesive layer/sealant layer) was produced in the same manner as in Example 9, except that the outer layer substrate was changed from a petroleum-derived biaxially oriented PET film (thickness 30 $\mu$m) to a petroleum-derived oriented polypropylene film (OPP: thickness 30 $\mu$m), and the second sealant layer (outer sealant layer) was changed from a petroleum-derived low-density polyethylene (LDPE) film (thickness 80 $\mu$m) to a three-layer co-extruded film of a petroleum-derived low-density polyethylene (LDPE) film (thickness 20 $\mu$m), a chemically recycled low-density polyethylene (PCR-Chemi R 100%-LDPE) film (thickness 40 $\mu$m), and a petroleum-derived low-density polyethylene (LDPE) film (thickness 20 $\mu$m).
Note that the vapor-deposited layer on the OPP film of the outer layer substrate was formed by vapor-depositing silicon oxide to a thickness of 10 nm, and the overcoat layer was an organic-inorganic hybrid layer formed using a composition containing a polyvinyl alcohol resin, tetraethoxysilane, and a silane coupling agent.

(Comparative Example 1)

A petroleum-derived biaxially oriented PET film (thickness 35 $\mu$m) was prepared as an outer layer substrate, and a materially recycled low-density polyethylene (PCMR 100%-LDPE) film (thickness 60 $\mu$m) from used polyethylene bags was prepared as a sealant layer. Note that "PCMR 100%-LDPE" means that the content of post-consumer mechanically recycled resin (PCMR) in the outer layer substrate is 100% by volume (100% by mass).
Then, a printed layer was formed on one surface of the outer layer substrate with a water-based flexographic ink, an adhesive for dry lamination (urethane-based adhesive) was applied to the surface of the printed layer to form an adhesive layer with a thickness of 3 $\mu$m (dry film thickness), and the sealant layer was laminated onto the adhesive layer to produce a laminate for packaging material (outer layer substrate/printed layer/adhesive layer/sealant layer).

(Comparative Example 2)

A laminate for packaging material (outer layer substrate/printed layer/adhesive layer/sealant layer) was produced in the same manner as in Comparative Example 1, except that the outer layer substrate was changed from a petroleum-derived biaxially oriented PET film (thickness 35 $\mu$m) to a petroleum-derived biaxially oriented PET film (thickness 50 $\mu$m), and the sealant layer was changed from a PCMR 100%-LDPE film (thickness 60 $\mu$m) to a low-density polyethylene (PCMR 40%-LDPE) film (thickness 60 $\mu$m) obtained by mixing low-density polyethylene (PCMR-LDPE) pellets obtained by washing and mechanically recycling used polyethylene bags and petroleum-derived LDPE pellets at a ratio of 40:60 (mass ratio).

Note that "PCMR 40%-LDPE" means that the content of post-consumer mechanically recycled resin (PCMR) in the sealant layer is 40% by mass. In this case, the volume of the layer using the recycled material can be calculated by taking into account the density of the mixed resin, and this can be used to calculate the film thickness ratio. Note that the densities of the mixed resins are the same, and % by mass is % by volume.

The density of the PCMR 40%-LDPE film used for the sealant layer was set to a low density (0.920 g/cm$^3$).

(Comparative Example 3)

A petroleum-derived biaxially oriented PET film (thickness 35 $\mu$m) was prepared as an outer layer substrate, a petroleum-derived biaxially oriented PET film (thickness 35 $\mu$m) was prepared as an intermediate substrate, and a three-layer co-extruded film of a petroleum-derived low-density polyethylene (LDPE) film (thickness 20 $\mu$m), a materially recycled low-density polyethylene (PCMR 100%-LDPE) film (thickness 20 $\mu$m) from used polyethylene bags, and a petroleum-derived low-density polyethylene (LDPE) film (thickness 20 $\mu$m) was prepared as a sealant layer.

Then, a printed layer was formed on one surface of the outer layer substrate with a water-based flexographic ink, an adhesive for dry lamination (urethane-based adhesive) was applied to the surface of the printed layer to form a first adhesive layer with a thickness of 3 $\mu$m (dry film thickness), and the intermediate substrate was laminated onto the first adhesive layer. Subsequently, an adhesive for dry lamination (urethane-based adhesive) was applied to the surface of the intermediate substrate opposite to the first adhesive layer to form a second adhesive layer with a thickness of 3 $\mu$m (dry film thickness), and the sealant layer was laminated onto the second adhesive layer to produce a laminate for packaging material (outer layer substrate/printed layer/first adhesive layer/intermediate substrate/second adhesive layer/sealant layer).

(Comparative Example 4)

A laminate for packaging material (outer layer substrate/printed layer/first adhesive layer/intermediate substrate/second adhesive layer/sealant layer) was produced in the same manner as in Comparative Example 3, except that the outer layer substrate was changed from a petroleum-derived biaxially oriented PET film (thickness 35 $\mu$m) to a petroleum-derived biaxially oriented polypropylene film (OPP: thickness 35 $\mu$m), the intermediate layer was changed from a petroleum-derived biaxially oriented PET film (thickness 35 $\mu$m) to a petroleum-derived biaxially oriented polypropylene film (OPP: thickness 35 $\mu$m), and the sealant layer was changed from a three-layer co-extruded film of a petroleum-derived low-density polyethylene (LDPE) film (thickness 20 $\mu$m), a materially recycled low-density polyethylene (PCMR 100%-LDPE) film (thickness 20 $\mu$m) from used polyethylene bags, and a petroleum-derived low-density polyethylene (LDPE) film (thickness 20 $\mu$m) to a materially recycled low-density polyethylene (PCMR 100%-LDPE) film (thickness 50 $\mu$m) from used polyethylene bags.

(Comparative Example 5)

A petroleum-derived biaxially oriented PET film (thickness 50 $\mu$m) was prepared as an outer layer substrate, a low-density polyethylene (PCMR 40%-LDPE) film (thickness 80 $\mu$m) obtained by mixing low-density polyethylene (PCMR-LDPE) pellets obtained by washing and mechanically recycling used polyethylene bags and petroleum-derived LDPE pellets at a ratio of 40:60 (mass ratio) was prepared as a sealant layer, and a low-density polyethylene (PCMR 40%-LDPE) film (thickness 80 $\mu$m) obtained by mixing low-density polyethylene (PCMR-LDPE) pellets obtained by washing and mechanically recycling used polyethylene bags and petroleum-derived LDPE pellets at a ratio of 40:60 (mass ratio) was prepared as a second sealant layer (outer sealant layer). Note that "PCMR 40%-LDPE" means that the content of post-consumer mechanically recycled resin (PCMR) in the sealant layer or the second sealant layer is 40% by mass. In this case, the volume of the sealant layer or the second sealant layer can be calculated by taking into account the density of the mixed resin, and this can be used to calculate the film thickness ratio. Note that the densities of the mixed resins are the same, and % by mass is % by volume.

The density of the PCMR-LDPE 40% film used for the outer layer substrate was set to a low density (0.920 g/cm$^3$).

Then, after forming a printed layer on one surface of the second sealant layer (outer sealant layer) with a water-based flexographic ink, an adhesive for dry lamination (urethane-based adhesive) was applied to one surface of the outer layer substrate to form a first adhesive layer with a thickness of 3 μm (dry film thickness), and the outer layer substrate and the surface of the second sealant layer (outer sealant layer) opposite to the printed layer were laminated together by the first adhesive layer. Subsequently, an adhesive for dry lamination (urethane-based adhesive) was applied to the other surface of the outer layer substrate to form a second adhesive layer with a thickness of 3 μm (dry film thickness), and the sealant layer was laminated onto the second adhesive layer to produce a laminate for packaging material (printed layer/second sealant layer (outer sealant layer)/first adhesive layer/outer layer substrate/second adhesive layer/sealant layer).

(Reference Example 1)

A petroleum-derived biaxially oriented PET film (thickness 25 μm) was prepared as an outer layer substrate, and a petroleum-derived LDPE film (thickness 60 μm) was prepared as a sealant layer.

Then, a printed layer was formed on one surface of the outer layer substrate with a water-based flexographic ink, an adhesive for dry lamination (urethane-based adhesive) was applied to the surface of the printed layer to form an adhesive layer with a thickness of 3 μm (dry film thickness), and the sealant layer was laminated onto the adhesive layer to produce a laminate for packaging material (outer layer substrate/printed layer/adhesive layer/sealant layer).

[Content of Recycled Resin]

For the laminates for packaging material of the Examples, Comparative Examples, and Reference Example produced as described above, the content of recycled resin in the laminate for packaging material was calculated based on the following formula.

$$\text{Content of recycled resin}$$
$$= 100 \times \text{total thickness of layers comprising recycled resin} \ / \ \text{total}$$
$$\text{thickness of the laminate for packaging material}$$

However, when a layer comprising recycled resin is a layer containing the recycled resin and a petroleum- or biomass-derived resin, a value obtained by multiplying the thickness of this layer by the content (% by mass) of the recycled resin in the layer was used as the value for the thickness of the layer comprising recycled resin.

[Evaluation]

The laminates for packaging material of the Examples, Comparative Examples, and Reference Example produced as described above were subjected to Evaluation 1 (generation of odor components), Evaluation 2 (fish eye), Evaluation 3 (impurity), and Evaluation 4 (variation of dynamic frictional force) as follows. Here, Evaluation 1 is an evaluation related to quality, and Evaluations 2 and 3 are evaluations related to hygienic property.

(1) Evaluation 1 (Generation of Odor Components)

First, the laminate for packaging material was analyzed using a purge and trap gas chromatography-mass spectrometry method. Specifically, a 1.0-gram sample was cut out from the laminate for packaging material, this sample was placed in a 20 mL vial with a trap for odor components, heated at 60°C for 1 hour to adsorb volatile components from the sample onto the trap, and the volatile components in the trap were analyzed with a purge and trap gas chromatography-mass spectrometer to obtain a total ion chromatogram.

Next, in the total ion chromatogram obtained as described above, a ratio R1 of a peak area of nonanal as an indicator of an odor component to a sum of peak area values of a total aliphatic hydrocarbon component, and a ratio R2 of a peak area of decanal to the sum of the peak area values of the total aliphatic hydrocarbon component were determined.

Then, an evaluation was performed based on the following evaluation criteria. The results are shown in Tables 1 to 3.

(Evaluation Criteria)

◎: R1 is less than 1.5% and R2 is less than 0.35%

○: R1 is less than 1.5% and R2 is 0.35% or more, OR R1 is 1.5% or more and R2 is less than 0.35%

✕: R1 is 1.5% or more and R2 is 0.35% or more

(2) Evaluation 2 (Fish Eye)

A sample with dimensions of 1 m × 1 m was cut out from the laminate for packaging material, the sample was placed on a black table with the sealant layer facing up, the number N1 of protrusions (ridge-like foreign matter) with a diameter of 0.5 mm or more and less than 1 mm was counted by visual inspection as fish eye 1, and the number N2 of protrusions (ridge-like foreign matter) with a diameter of 1 mm or more was counted by visual inspection as fish eye 2, and an evaluation was performed based on the following evaluation criteria. The results are shown in Tables 1 to 3.

(Evaluation Criteria)

◎: N1 is 10 or less and N2 is 0

○: N1 is 11 to 99 and N2 is 0

✕: N1 is 100 or more or N2 is 1 or more

(3) Evaluation 3 (Impurity)

The laminate for packaging material was analyzed using a Fourier Transform Infrared Spectrometer (FT-IR: Fourier Transform Infrared Spectroscopy) by an Attenuated Total Reflection (ATR) method to obtain an ATR spectrum. At this time, a diamond prism was used as a prism to be brought into close contact with the laminate for packaging material, and an angle of incidence with respect to the surface of the laminate for packaging material was 45°.

Then, a ratio R3 of an absorption coefficient of C=O stretching around 1720 cm$^{-1}$ derived from polyester and polyurethane to an absorption coefficient of methylene group C-H antisymmetric stretching around 2915 cm$^{-1}$ derived from polyethylene in the ATR spectrum was calculated, and an evaluation was performed based on the following evaluation criteria. The results are shown in Tables 1 to 3.

(Evaluation Criteria)

◎: R3 is less than 0.05

○: R3 is 0.05 or more and less than 0.1

✕: R3 is 0.1 or more

(4) Evaluation 4 (Variation of Dynamic Frictional Force)

The dynamic frictional force of the laminate for packaging material was measured using a multi-functional static and dynamic friction tester TL201Tt (manufactured by Trinity-Lab Inc.) and a tactile probe.

Specifically, the laminate for packaging material was placed on a test table with the sealant layer facing up, and the standard deviation of the dynamic frictional force was determined by moving a tactile probe at a sliding speed of 10 mm/sec while it was in contact with the laminate for packaging material (outer layer substrate side) with a load of 50 grams, and this standard deviation σ of the dynamic frictional force was taken as the variation of the dynamic frictional force. Then, an evaluation was performed based on the following evaluation criteria. The results are shown in Tables 1 to 3.

(Evaluation Criteria)

A:      σ is less than 0.35
B:      σ is 0.35 or more and less than 0.45
C:      σ is 0.45 or more

[Table 1]

| | Structure of Laminate | | | | | Evaluation | | | |
|---|---|---|---|---|---|---|---|---|---|
| | Second sealant layer | Outer layer substrate | Intermediate substrate | Sealant layer | Recycled resin content (vol%) | Evaluation 1 | Evaluation 2 | Evaluation 3 | Evaluation 4 |
| | | | | | | Occurrence of odor components | Fish eye | Impurity | Variation in dynamic frictional force |
| Example 1 | - | Petroleum-derived Biaxially oriented PET 35μm | - | PCR-Chemi R 100%-LDPE 50μm | 56.8 | ◎ | ◎ | ◎ | A |
| Example 2 | - | Petroleum-derived Biaxially oriented PET 35μm | Petroleum-derived Biaxially oriented PET 35μm | PCR-Chemi R 100%-LDPE 50μm | 39.7 | ◎ | ◎ | ◎ | A |
| Example 3 | - | Biomass-derived Biaxially oriented PET 35μm | - | PCR-Chemi R 40%-LDPE 50μm | 23.1 | ◎ | ◎ | ◎ | A |
| Example 4 | - | Petroleum-derived Biaxially oriented PET 35μm | Petroleum-derived Ny 35μm | Petroleum-derived LDPE (20μm) PCR-Chemi R 100%-LDPE (20μm) Petroleum-derived LDPE (20μm) | 14.7 | ◎ | ◎ | ◎ | A |
| Example 5 | - | Petroleum-derived Ny 35μm | Petroleum-derived Biaxially oriented PET 35μm | Petroleum-derived LDPE (20μm) PCR-Chemi R 100%-LDPE (20μm) Petroleum-derived LDPE (20μm) | 14.7 | ◎ | ◎ | ◎ | A |

[Table 2]

| | Structure of Laminate | | | | | Evaluation | | | |
|---|---|---|---|---|---|---|---|---|---|
| | Second sealant layer | Outer layer substrate | Intermediate substrate | Sealant layer | Recycled resin content (vol%) | Evaluation 1 | Evaluation 2 | Evaluation 3 | Evaluation 4 |
| | | | | | | Occurrence of odor components | Fish eye | Impurity | Variation in dynamic frictional force |
| Example 6 | - | Petroleum-derived OPP 35μm | Petroleum-derived OPP 35μm | PCR-Chemi R 40%-CPP 50μm | 15.9% | ◎ | ◎ | ◎ | A |
| Example 7 | - | Petroleum-derived OPP 25μm | Petroleum-derived OPP 25μm | PCR-ChemiR 100%-LDPE 50μm | 47.2 | ◎ | ◎ | ◎ | A |
| Example 8 | | Biomass-derived OPP 25μm | Petroleum-derived OPP 25μm | Petroleum-derived LDPE (20μm) PCR-Chemi R 100%-LDPE (20μm) Petroleum-derived LDPE (20μm) | 17.2 | ◎ | ◎ | ◎ | A |
| Example 9 | Petroleum-derived LDPE 80μm | Petroleum-derived Biaxially oriented PET 30μm | - | Petroleum-derived LDPE (20μm) PCR-Chemi R 100%-LDPE (40μm) Petroleum-derived LDPE (20μm) | 20 | ◎ | ◎ | ◎ | A |

EP 4 674 785 A1

19

(continued)

| | Structure of Laminate | | | | | Evaluation | | | |
|---|---|---|---|---|---|---|---|---|---|
| | Second sealant layer | Outer layer substrate | Intermediate substrate | Sealant layer | Recycled resin content (vol%) | Evaluation 1 | Evaluation 2 | Evaluation 3 | Evaluation 4 |
| | | | | | | Occurrence of odor components | Fish eye | Impurity | Variation in dynamic frictional force |
| Example 10 | Petroleum-derived LDPE (20μm) PCR-Chemi R 100%-LDPE (40μm) Petroleum-derived LDPE (20μm) | Petroleum-derived OPP 30μm | - | Petroleum-derived LDPE (20μm) PCR-Chemi R 100%-LDPE (40μm) Petroleum-derived LDPE (20μm) | 40.1 | ◎ | ◎ | ◎ | A |

[Table 3]

| | Structure of Laminate | | | | | Evaluation | | | |
|---|---|---|---|---|---|---|---|---|---|
| | Second sealant layer | Outer layer substrate | Intermediate substrate | Sealant layer | Recycled resin content (vol%) | Evaluation 1 | Evaluation 2 | Evaluation 3 | Evaluation 4 |
| | | | | | | Occurrence of odor components | Fish eye | Impurity | Variation in dynamic frictional force |
| Comparative Example 1 | - | Petroleum-derived Biaxially oriented PET 35μm | - | PCRMR100%-LDPE 60μm | 61.2 | × | × | × | C |
| Comparative Example 2 | - | Petroleum-derived Biaxially oriented PET 50μm | - | PCRMR40%-LDPE 60μm | 21.2 | ○ | ○ | × | B |
| Comparative Example 3 | - | Petroleum-derived Biaxially oriented PET 35μm | Petroleum-derived Biaxially oriented PET 35μm | Petroleum-derived LDPE (20μm) PCRMR100%-LDPE (20μm) Petroleum-derived LDPE (20μm) | 14.7 | × | × | ○ | B |
| Comparative Example 4 | - | Petroleum-derived OPP 35μm | Petroleum-derived OPP 35μm | PCRMR100%-LDPE 50μm | 39.7 | × | × | × | C |
| Comparative Example 5 | PCRMR40%-LDPE 80μm | Petroleum-derived Biaxially oriented PET 50μm | - | PCRMR40%-LDPE 80μm | 29.6% | × | × | × | B |
| Reference Example 1 | - | Petroleum-derived Biaxially oriented PET 25μm | - | Petroleum-derived LDPE 60μm | 0.0 | ◎ | ◎ | ◎ | A |

From the results shown in Tables 1 to 3, in all of the laminates for packaging material of Examples 1 to 10 using a chemically recycled resin, even when the content of the recycled resin was increased to 10% by volume or more or 10% by mass or more, almost no odor components were generated, and there were few foreign matters and impurities.

In contrast, in the laminates for packaging material of Comparative Examples 1 to 5 using a materially recycled resin, when the content of the recycled resin was increased to 10% by volume or more or 10% by mass or more, at least one of an increase in the amount of generated odor components, an increase in the number of fish eyes, or an increase in the amount of impurities occurred.

Note that, although the above Examples and Comparative Examples showed examples where the polyolefin resin is polyethylene, even if polypropylene is used as the polyolefin resin, similar results are obtained in terms of odor components, fish eyes, impurities, and variation of dynamic frictional force due to the similarity in resin structure.

From the above, it was confirmed that according to the laminate for packaging material of the present disclosure, hygienic property and quality can be improved even when the content of the recycled resin is sufficiently high.

**Reference Signs List**

10... outer layer substrate, 20... intermediate substrate, 30... sealant layer, 60... gas barrier layer, 100... laminate, 400... packaging bag (packaging container), 500... packaging article, C... contents.

**Claims**

1. A laminate for packaging material, comprising an outer layer substrate and a sealant layer, wherein

   the sealant layer is a polyolefin resin film comprising a recycled resin,
   a content of the recycled resin in the laminate for packaging material is 10% by volume or more or 10% by mass or more, and
   the recycled resin is a chemically recycled resin.

2. The laminate for packaging material according to claim 1, wherein the content of the recycled resin in the laminate for packaging material is 20% by volume or more or 20% by mass or more.

3. The laminate for packaging material according to claim 1, wherein a thickness of the sealant layer is greater than a thickness of the outer layer substrate, and a content of the recycled resin included in the sealant layer is 20% by volume or more or 20% by mass or more.

4. The laminate for packaging material according to claim 1, further comprising an intermediate substrate between the outer layer substrate and the sealant layer.

5. The laminate for packaging material according to claim 1, further comprising a gas barrier layer between the outer layer substrate and the sealant layer.

6. The laminate for packaging material according to claim 1, further comprising a second sealant layer on a surface of the outer layer substrate opposite to the sealant layer.

7. A packaging container obtained using the laminate for packaging material according to any one of claims 1 to 6.

8. A packaging article, comprising:

   the packaging container according to claim 7; and
   contents accommodated in the packaging container.

*Fig.1*

100

10

20

30

*Fig.2*

Fig.3

100

40

50

10

60

20

30

# Fig.4

500

10  20 30    30 20  10

C

100    100

400

## INTERNATIONAL SEARCH REPORT

| International application No. |
| --- |
| **PCT/JP2023/042986** |

**A.    CLASSIFICATION OF SUBJECT MATTER**

***B65D 65/40***(2006.01)i; ***B32B 27/32***(2006.01)i
FI:   B65D65/40 D; B32B27/32 E

According to International Patent Classification (IPC) or to both national classification and IPC

**B.    FIELDS SEARCHED**

Minimum documentation searched (classification system followed by classification symbols)

B65D65/40; B32B1/00-43/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2023-48894 A (DAI NIPPON PRINTING CO., LTD.) 07 April 2023 (2023-04-07) claims, paragraphs [0004], [0029], [0047]-[0048], [0115], [0126], [0153]-[0156], [0164]-[0194], [0204]-[0205], fig. 1-4 | 1-8 |
| Y | JP 2023-1768 A (SEKISUI CHEMICAL CO., LTD.) 06 January 2023 (2023-01-06) paragraphs [0005], [0008], [0021]-[0027], examples, tables 1-2 | 1-8 |
| A | JP 2023-31593 A (TOPPAN PRINTING CO., LTD.) 09 March 2023 (2023-03-09) entire text, all drawings | 1-8 |
| A | JP 2023-48882 A (DAI NIPPON PRINTING CO., LTD.) 07 April 2023 (2023-04-07) entire text, all drawings | 1-8 |
| A | JP 2022-31795 A (DAI NIPPON PRINTING CO., LTD.) 22 February 2022 (2022-02-22) entire text, all drawings | 1-8 |

☑ Further documents are listed in the continuation of Box C.        ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 January 2024** | **13 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
|---|
| **PCT/JP2023/042986** |

### C. DOCUMENTS CONSIDERED TO BE RELEVANT

| Category* | Citation of document, with indication, where appropriate, of the relevant passages | Relevant to claim No. |
|---|---|---|
| A | TW I777888 B(SHUMMI ENTERPRISE CO., LTD.) 11 September 2022 (2022-09-11) & US 2023/0219731 A1, paragraphs [0006], [0016], [0021]-[0023], [0029]-[0030], [0040]-[0041], fig. 1-2<br>paragraphs [0009], [0013], [0017]-[0018], [0028]-[0031], fig. 1-2 | 1-8 |
| A | WO 2019/243348 A1 (SABIC GLOBAL TECHNOLOGIES B.V.) 26 December 2019 (2019-12-26)<br>entire text, all drawings | 1-8 |

Form PCT/ISA/210 (second sheet) (July 2022)

## INTERNATIONAL SEARCH REPORT
### Information on patent family members

International application No.

**PCT/JP2023/042986**

| Patent document cited in search report | | | Publication date (day/month/year) | Patent family member(s) | | | Publication date (day/month/year) |
|---|---|---|---|---|---|---|---|
| JP | 2023-48894 | A | 07 April 2023 | (Family: none) | | | |
| JP | 2023-1768 | A | 06 January 2023 | (Family: none) | | | |
| JP | 2023-31593 | A | 09 March 2023 | WO | 2023/027063 | A1 | |
| JP | 2023-48882 | A | 07 April 2023 | (Family: none) | | | |
| JP | 2022-31795 | A | 22 February 2022 | WO | 2021/100770 | A1 | |
| | | | | EP | 4063116 | A1 | |
| WO | 2019/243348 | A1 | 26 December 2019 | EP | 3810420 | A1 | |

Form PCT/ISA/210 (patent family annex) (July 2022)

**EP 4 674 785 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022552096 A